(19) Europäisches Patentamt
European Patent Office
Office européen des brevets

(11) Veröffentlichungsnummer : **0 304 416 B1**

# (12) EUROPÄISCHE PATENTSCHRIFT

(45) Veröffentlichungstag der Patentschrift : **15.04.92 Patentblatt 92/16**

(51) Int. Cl.$^5$ : **B01J 13/02,** A61K 9/50

(21) Anmeldenummer : **88890211.1**

(22) Anmeldetag : **17.08.88**

## (54) Verfahren zur Bildung von Mikrokapseln oder Mikromatrixkörpern.

Die Akte enthält technische Angaben, die nach dem Eingang der Anmeldung eingereicht wurden und die nicht in dieser Patentschrift enthalten sind.

(30) Priorität : **18.08.87 AT 2072/87**

(43) Veröffentlichungstag der Anmeldung : **22.02.89 Patentblatt 89/08**

(45) Bekanntmachung des Hinweises auf die Patenterteilung : **15.04.92 Patentblatt 92/16**

(84) Benannte Vertragsstaaten : **AT BE CH DE FR GB IT LI**

(56) Entgegenhaltungen :
**EP-A- 0 267 003**
**DE-A- 1 962 039**
**DE-A- 2 041 899**
**FR-A- 2 364 686**
**FR-A- 2 429 616**
**US-A- 3 551 346**

(73) Patentinhaber : **F. Joh. KWIZDA Gesellschaft m.b.H.**
**Dr. Karl Lueger-Ring 6**
**A-1011 Wien (AT)**
Patentinhaber : **Th. Goldschmidt AG**
**Goldschmidtstrasse 100 Postfach 101461**
**W-4300 Essen 1 (DE)**

(72) Erfinder : **Zsifkovits, Wilhelm**
**Schubertstrasse 23**
**A-2100 Korneuburg (AT)**
Erfinder : **Grüning, Burghard, Dr.**
**Waldsaum 11**
**W-4300 Essen 1 (DE)**
Erfinder : **Kollmeier, Hans-Joachim, Dr.**
**Barkhorstrücken 27**
**W-4300 Essen (DE)**
Erfinder : **Schaefer, Dietmar, Dr.**
**Milchstrasse 40**
**W-4300 Essen 14 (DE)**
Erfinder : **Weitemeyer, Christian, Dr.**
**Sundernholz 67**
**W-4300 Essen (DE)**

(74) Vertreter : **Müllner, Erwin, Dr. et al**
**Patentanwälte Dr. Erwin Müllner Dipl.-Ing. Werner Katschinka Postfach 159**
**Weihburggasse 9**
**A-1010 Wien (AT)**

**EP 0 304 416 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Bildung von Mikrokapseln oder Mikromatrixkörpern, die eine nicht mit Wasser mischbare flüssige Phase enthalten, wobei eine organische Phase, welche a) das einzukapselnde, wasserunlösliche Material, b) ein kapsel-, bezw. matrixbildendes Monomer oder Prepolymer und c) gegebenenfalls ein Lösungsmittel umfaßt, in einer wäßrigen Phase in Tröpfchenform dispergiert wird, und wobei das kapsel-, bezw. matrixbildende Monomer oder Prepolymer eine Umhüllung des einzukapselnden Materials ausbildet.

Das erfindungsgemäße Verfahren ermöglicht die Herstellung kleiner oder kleinster Kapseln, die mit einer Membran oder dünnen Wand eine hydrophobe Flüssigkeit umschliessen und/oder die Bildung von Mikromatrixkörpern, die eine hydrophobe Flüssigkeit enthalten.

Derartige Kapseln oder Mikromatrixkörper werden zu verschiedenen Zwecken verwendet. Sie dienen zur Aufnahme von Farbstoffen, Tinten, chemischen Agenzien, pharmazeutischen Wirkstoffen, Geschmacksstoffen, Fungiziden, Bakteriziden, Herbiziden, Insektiziden und anderen Substanzen. Diese Materialien befinden sich im Innern der Kapseln, bezw. in dem Matrixkörper, gegebenenfalls in gelöster, emulgierter oder suspendierter Form. Das eingeschlossene Material wird durch die Umhüllung vor der Einwirkung von Licht, Sauerstoff und Feuchtigkeit geschützt. Der Wirkstoff kann durch Diffusion oder durch mechanische Zerstörung der Kapselwand oder das Matrixkörpers freigesetzt werden.

Zum Umhüllen bezw. Einkapseln hydrophober Flüssigkeiten sind verschiedene Verfahren bekannt. Sie sind in übersichtlicher Form in der Zeitschrift "Angewandte Chemie", 87, 556 - 567 (1975) beschrieben.

Meist bedient man sich zur Bildung der Kapseln des Verfahrens der Koazervierung, wie es z.B. in der AT-PS 324281 und At-PS 352686 beschrieben ist. Hierbei handelt es sich um die Trennung eines Sols eines oder mehrerer Polymerer in eine polymerreiche und eine polymerarme flüssige Phase. Das Koazervat erscheint zunächst als feine Dispersion von mikroskopisch kleinen Tropfen des Polymeren. Wenn in dieser Dispersion fremde Stoffe anwesend sind, schließt sich das Koazervat um diese Stoffe und kapselt sie ein. Die umhüllende Polymerschicht kann dann in geeigneter Weise verfestigt werden.

Die Koazervierung läßt sich gut für die Verkapselung kleiner Substanzmengen einsetzen. Da für die Verkapselung grosse Volumina benötigt werden, beispielsweise 35 bis 50 t Reaktionsmedium für 1 t Pflanzenschutzmittel, ist das Verfahren der Koazervierung zur Verkapselung grosser Substanzmengen zu aufwendig und weniger geeignet.

In der US-PS 3557515 wird als weiteres Verkapselungsverfahren die Umhüllung durch Grenzflächenpolykondensation beschrieben. Dabei handelt es sich um ein gegebenenfalls kontinuierlich durchführbares Verfahren, bei dem ein erster Reaktionsteilnehmer und ein diesem komplementärer zweiter Reaktionspartner benötigt werden, die jeweils in einer anderen Phase vorliegen, sodaß die beiden Reaktionspartner nach Bildung einer Dispersion an der Phasengrenzfläche der einzelnen Tröpfchen miteinander reagieren, wodurch die Tröpfchen umhüllt werden. Bei diesem Verfahren ist die Reaktionsführung schwierig und erfordert einen hohen technischen Aufwand.

Um die Notwendigkeit zweier Reaktionspartner zu vermeiden, hat man bereits versucht, derartige Mikrokapseln aus Polyharnstoff herzustellen. Entsprechend der GB-PS 1371179 wird ein Polyisocyanat mit der einzukapselnden Substanz unter Ausbildung einer organischen Phase vermengt. Anschliessend wird diese ölige Phase in einer wäßrigen Phase emulgiert. Nach Erhalt einer Emulsion mit gewünschter Teilchengrösse der emulgierten Phase wird die Grenzflächenpolymerisation, d.h. die Reaktion der Isocyanatgruppen mit Wasser, durch Zusatz eines Katalysators und/oder Temperaturerhöhung gestartet. Nach der Reaktion liegen diskrete Kapseln in Form einer wäßrigen Suspension vor. Dieses Verfahren hat den Nachteil, daß während der Hydrolyse des Isocyanates Kohlendioxid entwickelt wird, was zu einem Schäumen des Reaktionsmediums führt. Ausserdem wird im Verlauf der Lagerung aus nicht umgesetzten restlichen Isocyanatgruppen allmählich Kohlendioxid freigesetzt, wodurch es zum Platzen der Verpackung der auf diese Weise hergestellten Mikrokapseln kommen kann. Es ist zwar entsprechend der US-PS 4046741 möglich, die Mikrokapseln mit Ammoniak oder Aminen nachzubehandeln, um den Gehalt an restlichen Isocyanatgruppen zu vermindern. Dies bedingt aber einen weiteren Verfahrensschritt, der insbesondere aus wirtschaftlichen Gründen nicht vertretbar ist.

In der DE-OS 1962039 ist ein weiteres Verfahren zur Umhüllung der Teilchen einer in Wasser dispergierten Phase durch Bildung einer verfestigbaren Grenzschicht um die Teilchen beschrieben, bei dem man während oder nach der Herstellung der Dispersion oberflächenaktive Substanzen, welche mindestens eine Silylgruppe mit mindestens einer am Siliciumatom gebundenen hydrolysierbaren Gruppe als Endgruppe enthalten, zusetzt und die Verbindungen, gegebenenfalls in Gegenwart eines Alkoxysilans, hydrolysiert und kondensiert. Dieses Verfahren eignet sich gut zur Stabilisierung von Emulsionen, insbesondere von Silikonöl/Wasseremulsionen, gibt aber den umhüllten Öltröpfchen zuwenig Stabilität gegenüber mechanischen Einflüssen.

In der US-PS 3946106 ist ein Verfahren zur Herstellung von pharmazeutischen Formulierungen mit kontrollierter Freisetzung des Wirkstoffes beschrieben. Bei diesem Verfahren wird der Wirkstoff in der gewünschten Konzentration meistens bis zur Sättigungsgrenze in einer wässrigen Lösung von Polyethylenglykol gelöst. Anschliessend wird ein Silikonpolymer, welches sich bei Raumtemperatur vulkanisieren läßt, zugesetzt. Diese Mischung wird durch kräftiges Rühren emulgiert. Nach Zusatz eines geeigneten Katalysators wird die Emulsion in einen Silikonschlauch gefüllt, in dem innerhalb einer Stunde die Vulkanisation abläuft. Nach Entfernen des Silikonschlauches liegt eine schnurförmige Matrix vor, welche durch Abschneiden in verschiedene Teilstücke verschiedene Mengen Wirkstoffe enthält. Bei diesem Verfahren fallen somit keine Mikrokapseln, sondern relativ grosse Matrixkörper an. Diese lassen sich zerkleinern oder gar versprühen.

Es gibt noch eine Vielzahl weiterer Veröffentlichungen zu dieser Problemstellung, die aber über den oben gezeigten Stand der Technik nicht hinausgehen.

Der vorliegenden Erfindung liegt die Aufgabe zugrunde, ein Verfahren zur Bildung von Mikrokapseln oder Mikromatrixkörpern zu finden, welches in einfacher Weise durchführnbar ist, die Herstellung mechanisch ausreichend stabiler Kapseln oden Mikromatrixkönpern gestattet und zur technischen Durchführung, insbesondere zur Herstellung grösserer Produktmengen geeignet ist.

Überraschenderweise können diese und weitere Aufgaben durch ein Verfahren gelöst werden, welches erfindungsgemäß dadurch gekennzeichnet ist, daß als kapsel-, bezw. matrixbildendes Momomer eine siliciumorganische Verbindung den allgemeinen Formel

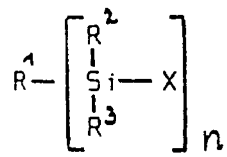

worin

R 1 ein geradkettiger oder verzweigter, gesättigter oder ungesätttigter n-wertiger Kohlenwasserstoffrest mit 2 bis 14000 Kohlenstoffatomen ist,

$R^2$, $R^3$ gleich oder verschieden sind und einen Kohlenwasserstoffrest mit 1 bis 6 Kohlenstoffatomen oden den Rest X bedeuten,

X eine Hydroxylgruppe oden ein hydrolysierbarer Rest und

n eine ganze Zahl = > 2 ist, oder ein Prepolymer hiervon,

verwendet und die Kondensation der siliciumorganishen Verbindungen zur Ausbildung der Umhüllung vorzugsweise in Gegenwart von Katalysatoren durchgeführt wird.

Typische Beispiele geeigneter Reste $R^1$ sind $-C_{12}H_{25}$, $-(CH_2)_8-$,

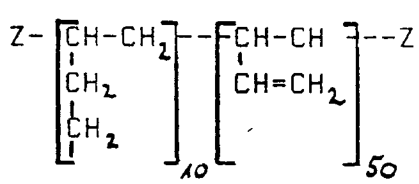

Dabei bedeutet Z eine endbegrenzende Gruppe: wie z.B. -H, $-CH_2CH_2CH=CH_2$, $-CH_2CH_2OH$, -COOH, -$CH_3$, $-C_4H_9$ , $-C_6H_5$, $-CH_2C_6H_5$.

$R^2$ und $R^3$ sind gleich oden verschieden. Sie haben die Bedeutung eines Kohlenwasserstoffrestes mit 1 bis 6 Kohlenstoffatomen, vorzugsweise mit 1 bis 4 Kohlenstoffatomen und sind insbesondere Methylreste. Sie können auch die Bedeutung des Restes X annehmen.

X ist eine Hydroxylgruppe oden ein hydrolysierbarer Rest. Als hydrolysienbare Reste kommen insbesondere die Alkoxyreste und die Acyloxyreste In Frage. Bevorzugte Alkoxyreste sind solche mit 1 bis 3 Kohlenstoffatomen. Bevorzugter Acyloxyrest ist der Acetoxyrest. Als hydrolysierbare Rest sind auch Halogenreste geeignet. Infolge des sich bei den Hydrolyse entwickelnden Halogenwasserstoffes sind aber diese Reste nicht bevorzugt.

n ist eine ganze Zahl = > 2 .

Beispiele geeigneten und gleichzeitig bevorzugter siliciumorganischen Verbindungen für das erfindungsgemäße Verfahren sind solche, bei denen $R^1$ ein aliphatischen Kohlenwasserstoffrest mit 8 oden 10 Kohlenstoffatomen, $R^2$ ein Methyl-, Methoxy- oden Ethoxyrest, $R^3$ ein Methoxy- oder Ethoxyrest, X eine Methoxy- oden Ethoxyrest und n = 2 ist.

Bevorzugt ist weiterhin als Monomer ein modifiziertes Polybutadien eines mittleren Molekulargewichtes von 3000, wobei 6 bis 14% den Butadieneinheiten $-Si(CH_3)(OCH_3)_2-$, $-Si(CH_3)(OC_2H_5)_2-$ oder $-Si(OC_2H_5)_3-$Reste tragen.

Der Silicium-Gehalt der siliciumorganischen Verbindungen liegt zweckmäßig innenhalb eines Bereiches von 0,1 bis 27 Gew.%. Den Silicium-Gehalt ist ausschlaggebend für den Grad der Vernetzung des kapselbildenden Polymeren und bestimmt damit die mechanische Festigkeit des Endproduktes. Vorzugsweise liegt den Silicium-Gehalt zwischen 2 und 27 Gew.% den silciumorganischen Verbindung.

Bei der Durchführung des erfindungsgemäßen Verfahrens wind die zu enkapsulierende nicht mit Wasser mischbare Substanz, Lösung oder Dispension mit dem Monomer oder Prepolymer in einem Gewichtsverhältnis von 98 : 2 bis 1 : 99, vorzugsweise 95: 5 bis 50 : 50, gemischt. Die hydrophobe Phase wind dann in der wäßrigen Phase emulgiert. Als Hilfsmittel bei der Herstellung der Dispersion der organischen Phase in der wäßrigen Phase können geignete Emulgier-, bezw. Dispergiermittel zugesetzt werden. So kann die wäßrige Phase 0,05 bis 1 Gew.-Teil Tensid, z.B. einen ethoxylierten Fettalkohol oder ein ethoxyliertes Alkylphenol und 0,05 bis 2 Gewichtsteile eines Schutzkolloides, wie z.B. Polyvinylakohol, Polyvinylpyrrolidon oder eines Polysaccharides, wie Xanthan-Gummi, jeweils bezogen auf 100 Gew.Teile Wasser, enthalten. Die hydrophobe Phase beträgt bevorzugt 1 bis 60 Gew.% der Gesamtdispersion.

Eine Steuerung des Verfahrens bezüglich der Größe und Einheitlichkeit der erhaltenen Kapseln und Mikromatrixkörper läßt sich nach einem üblichen Verfahren bewerkstelligen, das beim Emulgieren einer Flüßigkeit in einer anderen üblicherweise angewendet wird. Es kann jede Dispergiervorrichtung, die hohe Scherkräfte erzeugt, angewendet werden, um die gewünschte Tröpfchengröße im Bereich von 0,5 bis zu 4000 µm zu erhalten. Beispiel einer solchen Vorrichtung ist ein Ultra-Turrax-Rührer. Der eingestellte Bereich hängt vom gewünschten Verwendungszweck ab. Sobald die gewünschte Tröpfchengröße erreicht ist, wird der Betrieb der zum Erreichen dieser Tröpfchengröße eingesetzten Dispergiervorrichtung beendet. Für der weiteren Verfahrensablauf genügt leichtes Rühren. Kräftiges Rühren kann im Stadium der Kondensation der hydrolysierten siliciumorganischen Verbindungen schädlich sein.

Es kann angenommen werden, daß die am Siliciumatom befindlichen Halogen-, Acyloxy- oder Alkoxygruppen bei Zutritt von Wasser hydrolisieren. Die entstehender Si-OH-Gruppen kondersieren dann unter Bildung von Si-O-Si-Bindungen. Die Monomeren bezw. Polymeren vernetzen auf Grund dieser Reaktionen zu unlöslichen, hochpolymeren Produkten und umschließen die zu verkapselnde Substanz.

Zur Steuerung und Beschleunigung der Kapselbildung ist die Verwendung spezifischer Katalysatoren zu empfehlen. Derartige Katalysatoren sind aus dem Stand der Technik bekannt. Besonders geeignet sind organische Zinnsalze, wie Dibutylzinndilaurat, oder organische Verbindungen des Titans oder Zirkons. Brauchbar sind ferner Erdalkalialkoxylate und Acetylacetonate von Aluminium, Chrom, Eisen, Kobalt oder Kupfer. Die Katalysatoren können der organischen mit Wasser nicht mischbaren Phase beigegeben werden. Zu einem anderen bevorzugten Katalysatortyp gehören grenzflächenaktive Säuren, die der wäßrigen Phase zugegeben werden können. Besonders bevorzugte Beispiele solcher Säuren sind die Alkylbenzolsulfonsäuren, wie z.B. Dodecylbenzolsulfonsäure. Weitere Katalysatoren sind in dem Buch W. Noll, "Chemie und Technologie der Silikone", Verlag Chemie, 1968, Seite 181 ff., aufgeführt.

Die Katalysatoren werden vorzugsweise in Mengen von 0,05 bis 10 Masse-Teilen je 100 Teile nicht mit Wasser mischbarer Phase eingesetzt. Durch die Auswahl der Katalysatoren und die Dichte der vernetzungsfähigen Silylgruppen im kapsel- oder matrixbildenden Monomer oder Prepolymer ist die Beschaffenheit und sind die Eigenschaften des umhüllender Materials bezüglich Festigkeit und Penetrierbarkeit in weiten Bereichen zu beeinflussen.

Je nach Art des Katalysators ist die Reaktion nach einer Stunde bis zu vier Tagen beendet. Man kann im Mikroskop diskrete Kapseln oder Mikromatrixkörper sehen, welche stabil sind und nach dem Trocknen nicht ihre Form verlieren.

Das erfindungsgemäße Verfahren ist somit besonders gut zur Herstellung von Mikrokapseln oder Mikromatrixkörpern geeignet, wobei der Einsatz von mehreren Reaktionspartnern zur Bildung der Wände vermieder wird, ein Schäumen des Reaktionsmediums durch entstehendes Kohlendioxid nicht auftritt und lagerfähige, mechanisch ausreichend stabile Endprodukte erhalten werden.

Je nach Verwendungszweck können nach Beendigung der zur Bildung der Kapselwandungen bezw. der Mikromatrixkörper führender Reaktion die Kapseln oder Mikromatrixkörper in der wäßrigen Trägerphase verbleiben und die erhaltene Dispersion direkt verwendet werden. Falls erforderlich kann eine Abtrennung jedoch mittels irgendeines üblichen Abtrennungsverfahrens erfolgen, beispielsweise durch Absetzen, Filtrieren oder Sprühtrocknen. Zur Verbesserung der Lagerfähigkeit und zur Erleichterung der Anwendung können zusätzliche Stoffe, wie Verdickungsmittel, Biocide, oberflächenaktive Substanzen und Dispergiermittel zugesetzt werden.

Der Einschluß von Wirkstoffen, die für die Kontrolle oder Bekämpfung von Pflanzenkrankheiten nützlich sind, in Mikrokapseln oder Mikromatrixkörpern bietet einen Weg für eine Langzeitkontrolle von Krankheiten

unter der Verwendung von Verbindungen, die im allgemeinen nur eine kurzzeitige Wirksamkeit aufweisen. In gleicher Weise können Herbizide, Nematozide, Insektizide, Rodentizide und Bodennährstoffe mit guten Ergebnissen eingekapselt werden. Ebenso wurder mittels des erfindungsgemäßen Verfahrens Chemikalien für die Samenbehandlung eingekapselt. Auch andere biologische Erzeugnisse können eingekapselt werden, einschließlich Antihelmintika, Schlamm- und Schleimbekämpfungsmittel, Algenbekämpfungsmittel, Schwimmbeckenchemikalien, Mitizide, Acarizide, Tieranlockungsmittel, Antiseptika, Deodorants oder Desinfektionsmittel.

Das nach dem erfindungsgemäßen Verfahren eingekapselte Material kann von jeder mit Wasser nicht mischbaren Art sein. Das Material kann auch eine Kombination aus zwei oder mehreren verschiedenen Arten mit Wasser nicht mischbaren Materialien sein. Ein Beispiel für die Anwendung eines geeigneten mit Wasser nicht mischbaren Materials ist eine Kombination eines aktiven Fungizids und eines aktiven Insektizids. Denkbar ist auch die Einkapselung eines mit Wasser nicht mischbaren Materials, das einen aktiven Bestandteil, wie ein Fungizid, und einen inaktiven Bestandteil, wie ein Lösungsmittel oder einen Hilfsstoff, umfaßt. Festes Material kann durch dieses Verfahren dadurch eingekapselt werden, daß eine Lösung oder Dispersion des festen Materials in einem geeigneten Lösungsmittel gebildet wird; dabei kann normalerweise festes, mit Wasser nicht mischbares Material eingekapselt werden.

Beispiel 1:

12 g einer 66,7%igen Lösung eines 1,2-Polybutadiens (MG 3 000), in welchem 14 % der Butadieneinheiten durch -Si($CH_3$) ($OC_2H_5$)-Gruppen modifiziert sind, in Shellsol AB (aromatisches Lösungsmittelgemisch aus hauptsächlich Dimethylethyl- und Tetramethylbenzol-Isomeren) und 28 g Cypermethrin (RS)α-Cyano-3-phenoxybenzyl-(1-RS)-cis,trans-3-(2,2-dichlorvinyl)-2,2-dimethylcyclopropancarboxylat, ein Insektizid) werden vermischt und auf 50 °C erwärmt (nicht mit Wasser mischbare Phase). Ferner werden aus 250 ml demineralisiertem Wasser, 1 g Tridecylalkohol 15 EO und 60 g 2%iger wäßriger Xanthan-Gum-Lösung eine wässerige Phase hergestellt und darin mit Hilfe eines Dispergiergerätes (z. B. Ultra Turrax T 45) die Lösung des Insektizides emulgiert. Nach Erreichen des gewünschten Feinheit von 3 bis 50 μm werden 20 ml Dodecylbenzolsulfonsäurelösung (10 Vol.% in Wasser) als Katalysator zugegeben. Innerhalb von 2 Stunden kann man im Mikroskop kugelige Teilchen sehen, die auch nach dem Abtrocknen des Wassers ihre Forme behalten. Nach 24 Stunden wird der pH-Wert mit Hilfe von 2 N Natronlauge auf 4 eingestellt.

Beispiel 2:

7 g einer 66,7%igen Lösung eines 1,2-Polybutadiens (MG 3 000) in welchem 14 % der Butadieneinheiten durch -Si($CH_3$) ($OC_2H_5$)$_2$-Gruppen modifiziert sind, in Shellsol AB und 20 g Vernolate (S-Propyl-dipropylthiocarbamat, ein Herbizid) werden bei Raumtemperatur gemischt (nicht mit Wasser mischbare Phase). Ferner werden aus 400 ml demineralisiertem Wasser, 1 g Tridecylalkohol 15 EO und 50 g 2%iger wäßriger Xanthan-Gum-Lösung eine wässerige Phase hergestellt und darin mit einem Dispergiergerät (z. B. Ultra Turrax T 45) die Lösung des Herbizids emulgiert. 20 ml Dodecylbenzolsulfonsäurelösung (10 Vol.% in Wasser) werden der Dispersion als Katalysator zugegeben. Nach 24 Stunden kann man im Mikroskop diskrete Kapseln beobachten.

Beispiel 3:

In 300 ml einer Lösung, die aus 375 g 2%iger wäßriger Xanthan-Gum-Lösung, 1 500 ml demineralisiertem Wasser, 250 ml Phosphatpuffer pH 7, 5 g Tridecylalkohol 8 EO und 0,5 g eines Entschäumers, basierend auf Dimethylpolysiloxan und feindisperser Kieselsäure, hergestellt wurde, wird eine Mischung aus 53 g Chlorpyrifos (0,0-Diethyl-O-(3,5,6-trichlor-2-pyridyl)-monothiophosphat, ein Insektizid), 13 g Shellsol AB, 15 g 1,8-Bis(dimethoxymethylsilyl)-octan und 0,5 g Dibutylzinndilaurat als Katalysator mit Hilfe eines Dispergiergerätes emulgiert. Nach 72 Stunden kann man im Mikroskop diskrete Kapseln erkennen. Innerhalb von 10 Tagen setzt sich jeweils die disperse Phase am Boder ab. Eine Redispergierung durch Schütteln ist leicht möglich.

Beispiel 4:

Wird wie in Beispiel 3 gearbeitet, jedoch wird die innere wasserunlösliche Phase nur sehr grob in der wäßrigen Phase dispergiert, erhält man harte, ca. 0,5 - 1,5 mm große, glasklare, über ein Sieb leicht isolierbare Kügelchen.

Ca. 24 Stunden nach dem Isolieren und Trocknen der Körper bei Raumtemperatur treten bei einem Teil der Körper Trübungen auf, welche unter dem Mikroskop als Chlorpyrifoskristalle zu erkennen sind. Über eine

Zeitraum von 8 bis 10 Tagen sind alle Kügelchen trüb geworder und Chlorpyrifoskristalle haben sich an ihren Oberflächen abgeschieder. Werder anstelle von 15 g 1,8-Bis(Dimethoxymethylsilyl)-octan 25 g verwendet, bleiben diese Kügelchen länger klar und Chlorpyrifos kristallisiert langsamer aus.

Das Beispiel zeigt, daß die Freisetzung der biologisch aktiven Substanz über einen Zeitraum erfolgt, der sich nach Bedarf variieren läßt.

Beispiel 5.

In jeweils einer Mischung aus 200 ml demineralisiertem Wasser, 50 ml Phosphatpuffer pH 5, 60 g 2%iger Xanthan-Gum-Lösung, 0,5 Tridecylalkohol 15 EO und 0,1 g Entschäumer werden

a) eine Mischung aus 55 g Cypermethrin (technisch 90 % AI), 33 g 1,10-Bis-(dimethoxymethylsilyl)-decen und 1 g Dibutylzinndilaurat,

b) eine Mischung aus 55 g Cypermethrin (technisch 90 % AI), 25 g 1,10-Bis(dimethoxymethylsilyl)-decen und 1 g Dibutylzinndilaurat,

c) eine Mischung aus 55 g Cypermethrin (technisch 90 % AI), 18 g 1,10-Bis(dimethoxymethylsilyl)-decen und 1 g Dibutylzinndilaurat

mit Hilfe eines Dispergiergerätes emulgiert. Nach 72 Stunden werden die Proben auf 400 ml mit demineralisiertem Wasser aufgefüllt, so daß eine Mikrokapselsuspension von 125 g Cypermethrin pro Liter entsteht.

Beispiel 6:

In einer Mischung aus 260 ml demineralisiertem Wasser, 60 g 2%iger Xanthan-Gum-Lösung, 1 g Tridecylalkohol 15 EO und 0,1 g Entschäumer wird eine Lösung aus 200 g Cypermethrin techn., 100 g einer 50%igen Lösung von einem 1,2-Polybutadien (MG 3 000), in welchem 6 % der Butadieneinheiten mit Diethoxymethylsilylgruppen modifiziert sind und 2 g Dibutylzinndilaurat mit einem Dispergiergerät dispergiert. Nach 72 Stunden kann man im Mikroskop diskrete Kapseln beobachten. Die Mikrokapselsuspension enthält 50 % M/V Kapselmasse und 33,3 % M/V Cypermethrin. Sie läßt sich durch Zentrifugieren und Dekantieren von Wasser auf 60 % disperse Phase einengen:

Beispiel 7:

8 g einer 66,7%igen Lösung eines Polybutadiens (MG 3 000), in welchem 9 % der Butadieneinheiten durch $-Si(OC_2H_5)_3$-Gruppen modifiziert sind, in Shellsol AB und 20 g Vernolate werden bei Raumtemperatur gemischt (nicht mit Wasser mischbare Phase).

Aus 400 ml demineralisiertem Wasser, 1 g Tridecylalkohol 15 EO und 50 g 2%ige wässerige Xanthan-Gum-Lösung wird die wässerige Phase hergestellt und darin mit einem Dispergiergerät (Ultra Turrax T 45) die oben beschriebene Lösung emulgiert. 20 ml Dodecylbenzolsulfonsäurelösung (10 Vol.% in Wasser) werden diesem System zugesetzt. Nach 24 Stunden kann man im Mikroskop diskrete Kapseln beobachten.

Beispiel 8:

20 g einer 66,7%igen Lösung eines 1,2-Polybutadiens (MG 3 000), in welchem 6 % der Butadieneinheiten durch $-Si(CH_3)(OC_2H_5)_2$-Gruppen modifiziert sind, in Shellsol AB und 65 g Trifluralinlösung (50 g Trifluralin technisch + 15 g Shellsol AB, Trifluralin = $\alpha,\alpha,\alpha$-Trifluor-2,6-dinitro-N,N-dipropyl-p-toluidin, ein Herbizid) werden gemischt (nicht mit Wasser mischbare Phase).

Aus 160 ml demineralisiertem Wasser, 0,5 g Tridecylalkohol 15 EO und 25 g 2%ige Xanthan-Gum-Lösung wird die wässerige Phase hergestellt und darin die Lösung des Herbizids emulgiert. Nach Erreichen einer Feinheit von 5 bis 40 $\mu$m werden 20 ml Dodecylbenzolsulfonsäurelösung (10 Vol.% in Wasser) zugegeben. Nach 24 Stunden kann man im Mikroskop diskrete Kapseln beobachten, welche auch nach dem Abtrocknen des Wassers vom Objektträger ihre kugelige Form behalten. Ca. 2 Stunden nach dem Abtrocknen des Wassers kann man unter dem Mikroskop bei einzelnen Kapseln das Auskristallisieren von Trifluralin als gelbe Nadeln beobachten. In einem Zeitraum von einigen Tagen sind praktisch an allen Kapseln kristalline Ausscheidungen zu beobachten. Die biologisch wirksame Substanz, wie das Beispiel zeigt, steht nicht sofort in gesamter Menge zur Verfügung, sondern wird über einen längeren Zeitraum von der Mikrokörpern abgegeben.

Beispiel 9:

20 g einer 66,7%igen Lösung eines 1,2-Polybutadiens (MG 3 000), in welchem 6 % der Butadieneinheiten

durch $-Si(CH_3)(OCH_3)_2$-Gruppen modifiziert sind, in Shellsol AB und 65 g Trifluralinlösung (50 g Trifluralin technisch + 15 g Shellsol AB) werden gemischt (nicht mit Wasser mischbare Phase).

Aus 160 ml demineralisiertem Wasser, 0,5 g Tridecylalkohol 15 EO und 25 g 2%iger Xanthan-Gum-Lösung wird die wässerige Phase hergestellt und darin die oben beschriebene Lösung emulgiert. Nach Erreichen einer Feinheit von 5 bis 40 µm werden 20 ml Dodecylbenzolsulfonsäurelösung (10 Vol.% in Wasser) zugegeben. Nach 24 Stunder kann man im Mikroskop diskrete Kapseln beobachten, welche auch nach dem Abtrocknen des Wassers vom Objekt ihre kugelige Form behalten.

Beispiel 10:

Aus 25 g Dibutylphthalat (einem Weichmacher) und 15 g einer 66,7%igen Lösung eines 1,2-Polybutadiens (MG 3 000), in welchem 6 % der Butadieneinheiten durch $-Si(CH_3)(OC_2H_5)_2$-Gruppen modifiziert sind, in Shellsol AB wird eine Lösung hergestellt.

Diese Lösung wird in einer Mischung aus 30 g 2%iger wäßriger Xanthan-Gum-Lösung, 0,5 g Tridecylalkohol 15 EO und 10 ml Dodecylbenzolsulfonsäurelösung (10 Vol.% in Wasser) in 300 ml demineralisiertem Wasser mit einem Magnetrührer emulgiert. Die gebildeten Kapseln haben einen Durchmesser von 0,1 bis 1,5 mm und können bereits nach 1 Stunde isoliert werden. Diese Kapseln, welche hochelastisch sind, geben nach dem Zerdrücken ihren flüssigen Inhalt ab.

Beispiel 11:

Aus 25 g Dibutylphthalat (einem Weichmacher) und 15 g einer 66,7%igen Lösung eines 1,2-Polybutadiens (MG 3 000), in welchem 14 % der Butadieneinheiten durch $-Si(CH_3)(OC_2H_5)2$-Gruppen modifiziert sind, in Shellsol AB wird eine Lösung hergestellt.

Diese Lösung wird in einer Mischung aus 30 g 2%iger wäßriger Xanthan-Gum-Lösung, 0,5 g Tridecylalkohol 15 EO und 10 ml Dodecylbenzolsulfonsäurelösung (10 Vol.% in Wasser) in 300 ml demineralisiertem Wasser mit einem Magnetrührer emulgiert. Die gebildeten Kapseln haben einen Durchmesser von 0,1 bis 1,5 mm und können nach dem Verdünnen der Kapselsuspension mit ca. 2 l demineralisiertem Wasser durch Absaugen über eine Nutsche leicht isoliert werden.

Beispiel 12:

Aus 15 g Dibutylphthalat (einem Weichmacher), 5 g Bis-(dimethoxymethylsilyl)-ethan und 0,2 g Dibutylzinndilaurat wird eine Lösung hergestellt.

Diese Lösung wird in einer Mischung aus 30 g 2%iger wäßriger Xanthan-Gum-Lösung, 0,5 g Tridecylalkohol 15 EO in 300 ml demineralisiertem Wasser mit einem Magnetrührer emulgiert. Nach 24 Stunder kann man im Mikroskop diskrete Teilchen mit einem Durchmesser von 50 bis 500 µm beobachten. Diese Teilchen behalten auch nach dem Abtrocknen des Wassers vom Objektträger eine kugelige Struktur.

Beispiel 13:

Aus 30 g Dibutylphthalat und 10 g einer 67%igen Lösung eines 1,2-Polybutadiens (MG 3 000), in welchem 6 % der Butadieneinheiten durch $-Si(CH_3)(OCH_3)_2$-Gruppen modifiziert sind, in Shellsol AB wird eine Lösung hergestellt. Dazu fügt man 2,8 g Titantetraisopropylat.

Diese Lösung wird in einer Mischung aus 300 ml demineralisiertem Wasser 30 g Xanthan-Gum-Lösung 2 % in Wasser und 0,1 g Tridecylalkohol 8 EO mit einem Flügelrührer emulgiert.

Es erfolgt eine rasche Bildung von Kapseln, welche einen Durchmesser von 0,1 bis 3,0 mm haben und sich nach dem Verdünnen der Suspension leicht über eine Nutsche abfiltrieren lassen.

Beispiel 14:

Aus 275 g Vernolate techn. und 40 g eines 1,2-Polybutadiens (MG 1 000), in welchen 16 % der Butadieneinheiten mit Methyldiethoxysilylgruppen modifiziert sind, wird eine Lösung hergestellt.

Diese Lösung wird in einer Mischung aus 400 ml demineralisiertem Wasser, 100 g Xanthan-Gum-Lösung 2%ig und 2 g Tridecylalkohol 15 EO mit Hilfe eines Ultra Turrax T 45 emulgiert. Nach Erreichen einer Emulsionsfeinheit von 5 bis 30 µm werden 40 ml 10%ige Dodecylbenzolsulfonsäurelösung mit einem Flügelrührer eingerührt. Nach 6 Stunder wird die Kapselsuspension mit 2N Natronlauge auf einen pH von 6 eingestellt. Unter dem Mikroskop kann man diskrete Kapseln beobachten. Diese Kapselsuspension wird auf 1 l mit demineralisiertem

siertem Wasser aufgefüllt, so daß sie 240 g/l S-propyl-dipropylthiocarbamat enthält.

Die fertiggestellte Mikrokapselsuspension ist mit der in der Landwirtschaft üblichen Feldspritzen gut auszubringen.

Beispiel 15:

Aus 275 g Vernolate techn. und 60 g eines 1,2-Polybutadiens (MG 1 000), in welchem 16 % der Butadieneinheiten mit Methyldiethoxysilylgruppen modifiziert sind, wird eine Lösung hergestellt.

Die weiteren Verfahrensschritte sind wie im Beispiel 19 bereits angeführt und erbrachten die gleichen Ergebnisse.

Beispiel 16:

14 g einer 33%igen Lösung eines 1,2-Polybutadiens (MG ≧ 100 000), in welchem 2 % der Butadieneinheiten durch $-SiCH_3(OC_2H_5)_2$-Gruppen modifiziert sind, in Shellsol AB und 15 g Vernolathe werden bei Raumtemperatur gemischt (nicht mit Wasser mischbare Phase). Ferner werden aus 400 ml demineralisiertem Wasser, 1 g Tridecylalkohol 15 EO und 50 g 2%iger wäßriger Xanthan-Gum-Lösung eine wäßrige Phase hergestellt und darin mit einem Ultra Turrax die Lösung des Herbizids emulgiert. 20 ml Dodecylbenzolsulfonsäurelösung (10 Vol.% in Wasser) werden der Dispersion als Katalysator zugegeben. Nach 24 Stunden kann man im Mikroskop diskrete Kapseln beobachten.

Beispiel 17:

Eine Mischung aus 10 g eines 1,2-Polybutadiens,-in welchem 5 % der Butadieneinheiten durch $-SiCH_3Cl_2$-Gruppen modifiziert sind, und 10 g Cyclohexan werden in 150 ml Wasser, welches 1,5 g Nonylphenol 10 EO enthält, mit Hilfe eines Magnetrührers emulgiert.

Die Kapselbildung erfolgt spontan. Unter dem Mikroskop kann man die Ausbildung einer dünnen Umhüllung beobachten. Sobald man das Rühren unterbricht, koagulieren die Kapseln ohne aber ineinander überzulaufen. Das heiβt, auch im Falle des Aneinanderklebens der Kapseln bleibt deren eigenständige Form erhalten; die Wände werden beim Koogulieren nicht zerstört, die Kapseln bleiben vielmehr erhaten.

Beispiel 18:

Eine Mischung aus 10 g eines 1,2-Polybutadiens, in welchem 25 % der Butadieneinheiten durch $-SiCH_3Cl_2$-Gruppen modifiziert sind, und 10 g Cyclohexan werden in 150 ml Wasser, welches 1,5 g Nonylphenol 10 EO enthält, mit Hilfe eines Magnetrührers emulgiert.

Die Kapselbildung erfolgt spontan. Die Kapseln koagulieren sofort. Unter dem Mikroskop kann man sehen, daß die Kügelchen aneinander haften ohne ihre Primärstruktur zu verlieren. Man kann sie leicht zwischen Objektträger und Deckglas zerdrücken.

Beispiel 19:

Eine Mischung aus 15 g 2-(1-methylheptyl)-4,6-dinitrophenyl-crotonat, 5 g Cyclohexan, 0,5 g Dibutylzinndilaurat und 15 g eines 1,2-Polybutadiens, in welchem 5 % der Butadieneinheiten durch $-SiCH_3Cl_2$-Gruppen modifiziert sind, wird in einer Phosphatpufferlösung, pH-8,2 (100 ml), welche 1 g Nonylphenol EO-Phosphatester als Emulgator enthält, mit einem Ultra Turrax T 45 emulgiert.

Die Kapselbildung erfolgt spontan. Unter dem Mikroskop kann man teilweise torpedoförmige Kapseln beobachten.

Beispiel 20:

Zum Beweis der Langzeitwirkung von erfindungsgemäß eingekapseltem Wirkstoff gegenüber nicht umhülltem Wirkstoff wurde folgender Versuch durchgeführt:

Von zwei Heraklithplatten (1 x 0,5 m), welche mit einem Mörtel (pH 11,5) verputzt sind, wurde eine mit der Versuchsformulierung 5 c und die andere mit einem Cypermethrin-Emulsionskönzentrat behandelt. Es kamen jeweils 20 mg Wirkstoff pro Platte (0,5 $m^2$) zum Einsatz. Nach dem Trocknen der aufgebrachten Wirkstoffformulierung wurden die behandelten Platten mit Plexiglashauben (95-45-60 cm) abgedeckt und jeweils zwischen 10 und 30 Stück Hausfliegen (Musca domestica) eingelassen. Nach 24 Stunden wurde der Prozentanteil toter

Fliegen bestimmt, tote wie lebende Fliegen entfernt und wieder frische Versuchstiere eingelassen. Es zeigte sich, daß die Wirkung des Cypermethrin-Emulsionskonzentrates abgesunken war, wogegen die erfindungsgemäße Kapselsuspension nach 4 Tagen noch 80 %, nach 6 Tagen noch 50 % und nach 14 Tagen immer noch 25 % der ursprünglichen Wirkung zeigte. Der alkalienempfindliche Wirkstoff Cypermethrin wird also durch das erfindungsgemäße Verfahren der Enkapsulierung gut vor Zersetzung geschützt.

Beispiel 21:

Verkapselung eines Farbbildnergemisches

Aus 12 g Chlorparaffin (52 % Cl), 12 g Xylol, 0,6 g Kristallviolettlacton und 0,2 g Benzoylleucomethylenblau wird unter leichtem Erwärmen eine Lösung hergestellt. Diese wird mit 7,5 g eines 1,2-Polybutadiens (MG 1 000), in welchem 16 % der Butadieneinheiten mit Methyldiethoxysilylgruppen modifiziert sind, und 2 g Dibutylzinndilaurat vermischt.

Die so erhaltene Lösung wird in einer Mischung 100 ml demineralisiertem Wasser, 30 g Xanthan-Gum-Lösung 2%ig und 0,25 g Tridecylalkohol 15 EO mit Hilfe eines Ultra Turrax T 45 emulgiert. Nach Erreichen einer Emulsionsfeinheit von 5 bis 20 µm wird mit einem Flügelrührer noch 3 Stunden langsam weitergerührt. Unter dem Mikroskop kann man diskrete Kapseln beobachten.

Ein Teil der Suspension wird in einer Schichtdicke von 150 µm auf ein Blatt Papier aufgetragen. Auf ein anderes Blatt Papier wird in gleicher Schichtdicke eine Suspension aus 20 g aktivierter Bleicherde, 2 g Hydroxyethylcellulose und 78 g Wasser aufgetragen. Nach dem Trocknen der Papiere werden diese in geeigneter Weise aufeinandergelegt. Es wird ein gut geeignetes Reaktionsdurchschreibpapier erhalten.

## Patentansprüche

1. Verfahren zur bildung von Mikrokapseln oder Mikromatrixkörpern, die eine nicht mit Wasser mischbare flüssige Phase enthalten, wobei eine organische Phase, welche a) das einzukapselnde, wasserunlösliche Material, b) ein kapsel-, bzw. matrixbilderdes Monomer oder Prepolymer und c) gegebenenfalls ein Lösungsmittel umfaßt, in einer wäßrigen Phase in Tröpfchenform dispergiert wird, und wobei das Kapsel-, bzw. matrixbildende Monomer oder Prepolymer eine Umhüllung des einzukapselnder Materials ausbildet, dadurch gekennzeichnet, daß als kapsel-, bzw. matrixbilderdes Monomer eine siliciumorganische Verbindung der allgemeinen Formel

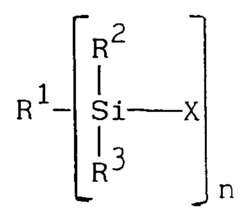

worin $R^1$ ein geradkettiger oder verzweigter, gesättigter oder ungesättigter n-wertiger Kohlenwasserstoffrest mit 2 bis 14 000 Kohlenstoffatomen ist,
$R^2$, $R^3$ gleich oder verschieden sind und einen Kohlenwasserstoffrest mit 1 bis 6 Köhlenstoffatomen oder der Rest X bedeuten,
X eine Hydroxylgruppe oder ein hydrolysierbarer Rest und n eine ganze Zahl = >2 ist, oder ein Prepolymer hievon, verwendet und die Kondensation der siliciumorganischen Verbindung zur Ausbildung der Umhüllung vorzugsweise in Gegenwart von Katalysatoren durchgeführt wird.

2. Verfahren nach Anspruch 1, dadurch gekennzeichnet, daß als Monomer eine siliclumorganische Verbindung, deren Rest $R^1$ 2 bis 1000 Kohlenstoffatome aufweist, verwendet wird.

3. Verfahren nach Anspruch 1, dadurch gekennzeichnet, daß als Monomer eine siliciumorganische Verbindung, deren Rest $R^1$ 2 bis 250 Kohlenstoffatome aufweist, verwendet wird.

4. Verfahren nach Anspruch 1, dadurch gekennzeichnet, daß als Monomer eine siliciumorganische Verbindung, bei der $R^1$ ein aliphatischer Kohlenwasserstoffrest mit 8 bis 10 Kohlenstoffatomen, $R^2$ ein Methyl-, Methoxy- oder Ethoxy-rest, $R^3$ ein Methoxy- oder Ethoxyrest, X ein Methoxy- oder Ethoxyrest und n = 2 ist, verwendet wird.

5. Verfahren nach Anspruch 1, dadurch gekennzeichnet, daß als Monomer ein modifiziertes Polybutadien

eines mittleren Molekulargewichtes von 3000, wobei 6 bis 14 % der butadieneinheiten $-Si(CH_3)(OCH_3)_2-$, $-Si(CH_3)(OC_2H_5)_2$-oder $-Si(OC_2H_5)_3$-Reste tragen, verwendet wird.

6. Verfahren nach einem oder mehreren der vorhergehender Ansprüche, dadurch gekennzeichnet, daß als Kondensationskatalysatoren grenzflächenaktive organische Säuren oder organische Verbindungen des Zinns oder Titans verwendet werden.

7. Verfahren nach einem oder mehreren der vorhergehender Ansprüche, dadurch gekennzeichnet, daß das Monomer, bzw. Prepolymer in der hydrophoben Phase in einer Menge von 5 bis 95 Gew.-%, bezogen auf hydrophobe Phase, enthalten ist, und die hydrophobe Phase 1 bis 60 Vol% der Gesamtdispersion bildet.

## Revendications

1. Procédé de préparation de microcapsules ou de corpuscules formant matrice contenant une phase liquide non miscible à l'eau, dans lequel une phase organique renfermant a) le produit à encapsuler, insoluble dans l'eau, b) un monomère ou un prépolymère devant former la capsule ou la matrice, et c), le cas échéant, un solvant, est dispersée dans une phase aqueuse sous forme de gouttelettes et le monomère ou le prépolymère devant former la capsule ou la matrice crée un enveloppement du matériau à encapsuler, caractérisé en ce que, comme monomère devant former la capsule ou la matrice, on utilise un dérivé organique du silicium répondant à la formule générale:

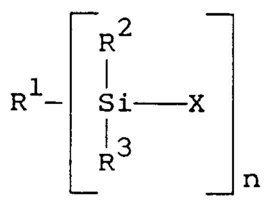

dans laquelle:

$R^1$ représente un radical hydrocarboné n-valent à chaîne droite ou ramifiée, saturé ou insaturé renfermant de 2 à 14 000 atomes de carbone;

$R^2$, $R^3$ sont identiques ou différents et signifient un radical hydrocarboné renfermant de 1 à 6 atomes de carbone ou le reste X;

X représente un groupe hydroxyle ou un reste hydrolysable; et

n est un nombre entier supérieur ou égal à 2;

ou un de ses prépolymères,

et la condensation du dérivé organique du silicium devant réaliser l'enveloppement est, de préférence, mise en oeuvre en présence de catalyseurs.

2. Procédé selon la revendication 1, caractérisé en ce que l'on emploie comme monomère un dérivé organique du silicium dont le reste $R^1$ renferme de 2 à 1 000 atomes de carbone.

3. Procédé selon la revendication 1, caractérisé en ce que l'on emploie comme monomère un dérivé organique du silicium dont le reste $R^1$ renferme de 2 à 250 atomes de carbone.

4. Procédé selon la revendication 1, caractérisé en ce que l'on emploie comme monomère un dérivé organique du silicium dans lequel $R^1$ représente un reste d'hydrocarbure aliphatique renfermant de 8 à 10 atomes de carbone, $R^2$ représente un radical méthyle, méthoxy ou éthoxy, $R^3$ représente un radical méthoxy ou éthoxy et n = 2.

5. Procédé selon la revendication 1, caractérisé en ce que l'on emploie comme monomère un polybutadiène modifié dont le poids moléculaire moyen est égal à 3 000, dans lequel de 6 à 14% des motifs butadiène portent un reste $-Si(CH_3)(OCH_3)_2-$, $-Si(CH_3)(OC_2H_5)_2-$ ou $-Si(OC_2H_5)_3$.

6. Procédé selon l'une quelconque des revendications précédentes, caractérisé en ce que l'on emploie comme catalyseurs de condensation des acides organiques tensio-actifs ou des dérivés organiques de l'étain ou du titane.

7. Procédé selon l'une quelconque des revendications précédentes, caractérisé en ce que le monomère ou le prépolymère est contenu dans la phase hydrophobe en quantité de 5 à 95% par rapport au poids de la phase hydrophobe et la phase hydrophobe forme de 1 à 60% du volume total de la dispersion.

## Claims

1. Method for forming microcapsules or micromatrix particles containing a liquid phase immiscible with water, in which an organic phase, which comprises a) the water-insoluble material to be encapsulated, b) a capsule- or matrix-forming monomer or prepolymer and c) if required a solvent, is dispersed in an aqueous phase in droplet form, and in which the capsule- or matrix-forming monomer or prepolymer forms a casing for the material to be encapsulated, characterized in that there is used as the capsule- or matrix-forming monomer an organosilicon compound of the general formula

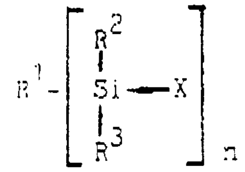

in which $R^1$ is a straight-chain or branched, saturated or unsaturated n-valent hydrocarbon residue with 2 to 14,000 carbon atoms, $R^2$, $R^3$ are the same or different and derote a hydrocarbon residue with 1 to 6 carbon atoms or the group X,
X is a hydroxyl group or a hydrolysable group and
n is a whole number equal to or greater than 2,
or a prepolymer thereof,
and the condensation of the organosilicon compound to form the casing is preferably performed in the presence of catalysts.

2. Method according to claim 1, characterized in that an organosilicon compound whose group $R^1$ has 2 to 1000 carbon atoms is used as the monomer.

3. Method according to claim 1, characterized in that an organosilicon compound whose group $R^1$ has 2 to 250 carbon atoms is used as the monomer.

4. Method according to claim 1, characterised in that there is used as the monomer an organosilicon compound in which $R^1$ is an aliphatic hydrocarbon residue with 8 to 10 carbon atoms, $R^2$ is a methyl, methoxy or ethoxy group, $R^3$ is a methoxy or ethoxy group, X is a methoxy or ethoxy radical and n = 2.

5. Method according to claim 1, characterized in that as the monomer there is used a modified polybutadiene of an average molecular weight of 3000, in which 6 to 14 % of the butadiene units contain -$Si(CH_3)(OCH_3)_2$-, -$Si(CH_3)(OC_2H_5)_2$- or -$Si(OC_2H_5)_3$- groups.

6. Method according to one or more of the preceding claims, characterized in that surface-active organic acids or organic compounds of tin or titanium are used as condensation catalysts.

7. Method according to one or more of the preceding claims, characterized in that the monomer or prepolymer is contained in the hydrophobic phase in an amount of 5 to 95 % wt, with respect to the hydrophobic phase, and the hydrophobic phase constitutes 1 to 60 vol. % of the total dispersion.